# EUROPEAN PATENT APPLICATION

(11) **EP 1 626 347 A1**
(43) Date of publication of application: **15.02.2006**
(21) Application number: 04728680.2
(22) Date of filing: 21.04.2004
(51) Int. Cl.: G06F 15/00, H04L 9/32

(54) **TERMINAL DEVICE AUTHENTICATION SYSTEM**

(30) Priority: 21.04.2003 JP 2003115754; 29.03.2004 JP 2004095272
(71) Applicant: SONY CORPORATION, Tokyo 141-0001 (JP)
(72) Inventor: MIURA, Takayuki c/o Sony Corporation, Tokyo 141-0001 (JP); KATSUBE, Tomohiro c/o Sony Corporation, Tokyo 141-0001 (JP); SUZUKI, Naoshi c/o Sony Corporation, Tokyo 141-0001 (JP)
(74) Representative: Horner, David Richard
(86) International application number: PCT/JP2004/005740
(87) International publication number: WO 2004/095301

(57) **Abstract**

A terminal-device authentication system is capable of appropriately allocating the allocation target of a CE device. The device ID of the CE device (3) includes company information. The CE device (3) uses the company information to inquire of a company-information allocation server (6) about an authentication-target allocation server (8) to be connected and uses the device ID to inquire of the authentication-target allocation server (8) about an authentication server (9) to be connected. The CE device (3), which is authenticated in the authentication server (9), transmits an authentication result to a service server (10).

## Description

### Technical Field

The present invention relates to a terminal-device authentication system and the like. Particularly, the present invention relates to association of device IDs with authentication servers for authenticating devices to perform the authentication by an appropriate server.

### Background Art

Recently, consumer electronics (CE) devices have been in widespread use. The CE devices include audiovisual systems including a video cassette recorder, a hard disk recorder, a stereo set, and a television set; electronic equipment including a personal computer, a digital camera, a camcorder, a personal digital assistance (PDA), a game machine, and a home router; home electronic appliances including a rice cooker and a refrigerator; and other electronic devices. The CE devices incorporate computers and use services over a network.

Users can access a server and download content by using the CE devices to utilize the services provided by the server.

Some services are provided by the server to all the CE devices and some services are provided only to certain CE devices that have been authenticated.

When the server provides services requiring device authentication to CE devices, the CE devices are authenticated by authentication servers and the services are provided only if the CE devices are authenticated.

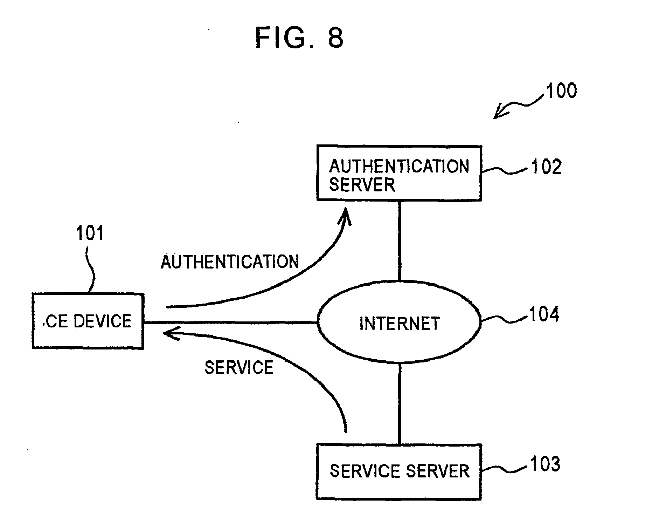

Fig. 8 shows an example of the structure of an authentication system 100 of a CE device.

This authentication system is disclosed in an unpublished patent document (Japanese Patent Application No. 2002-144896).

Conventionally, in the authentication of a CE device, authentication information (important security information, such as a passphrase or a device ID) is directly transmitted to a service server. However, a service server is usually managed by an individual or an arbitrary organization and, therefore, the service server has a problem of security. Accordingly, an additional device authentication server that performs device authentication as a substitute for the service server is provided in the above authentication system.

The authentication system 100 has a CE device 101, an authentication server 102, and a service server 103 that can be connected to each other over the Internet 104.

A user connects the CE device 101 to the service server 103 in order to utilize a service provided by the service server 103.

When the user wants provision of a service requiring the device authentication, the service server 103 transmits the information concerning the authentication server 102 to the CE device 101 and requests the CE device 101 to receive the device authentication in the authentication server 102. In response to this request, the CE device 101 receives the device authentication in the authentication server 102.

The service server 103 confirms that the CE device 101 has received the device authentication in the authentication server 102, and provides the service to the CE device 101.

In the authentication of the CE device 101 in this authentication system, the service server 103 can know which authentication server (the authentication server 102 in Fig. 8) the CE device 101 requiring the authentication is authenticated in, because there is a single authentication server 102.

Hence, the service server 103 can transmit the information concerning the authentication server 102 to the CE device 101 when the service server 103 requests the device authentication.

In contrast, when there are multiple authentication servers 102, the service server 103 has no scheme for transmitting the information concerning an appropriate authentication server 102 to the CE device 101 that has accessed the authentication system. Accordingly, the CE device 101 cannot disadvantageously acquire the information concerning the appropriate authentication server 102.

Since the CE device 101 is manufactured and distributed by multiple companies, there is a need to provide a mechanism in which multiple authentication servers 102 are provided and allocated based on the CE device 101 that has accessed the authentication system.

Techniques in which multiple authentication servers are provided in a system and the authentication servers are allocated based on the user who has accessed the system are disclosed in the following publications, although they do not relate to the device authentication of a CE device.

Japanese Unexamined Patent Application Publication No. 2002-197061 discloses a technique in which the authentication process of a user is allocated based on whether the user registered in an Internet service provider (ISP) is a general user or a specific user. The allocation is performed in the following manner.

First, the telephone numbers of general users and the telephone numbers of specific users are allocated in an allocation server. Next, the allocation server determines whether the user is a general user or a specific user based on his/her telephone number and allocates the user to the corresponding authentication server. The user ID and password of the user are transmitted from his/her terminal to the allocation server.

Japanese Unexamined Patent Application Publication No. 2000-331095 discloses a technique in which, when a user accesses an authentication system, the authentication server that has issued the ID in registration of the user allocates the user.

The allocation is performed in the following manner.

First, the user transmits his/her user ID and password to an allocation server. The allocation server determines an authentication server that has issued the user ID based on a certain digit of the user ID. The allocation server then transmits the user ID and password to the determined authentication server for authenticating the user.

As general business structures, there are cases in which the authentication targets of CE devices are allocated for every company that provides multiple authentication servers. It is difficult to accommodate these cases even by using the techniques disclosed in the patent documents described above.

Accordingly, an object of the present invention is to provide a device authentication system and like capable of appropriately allocating the authentication target of a CE device.

### Disclosure of Invention

In order to achieve the above object, the present invention provides a terminal-device authentication system characterized by including a service server for, when a service requiring device authentication is supplied to a terminal device, transmitting connection information for a first allocation server to the terminal device and receiving an authentication result from the terminal device; the first allocation server receiving first allocation information from the terminal device and transmitting connection information for a second allocation server corresponding to the first allocation information; the second allocation server receiving second allocation information from the terminal device and transmitting connection information for an authentication server corresponding to the second allocation information; and the authentication server receiving authentication information from the terminal device to perform the device authentication and transmitting the authentication result to the terminal device (a first structure).

The terminal device that utilizes the service provided by the service server in the terminal-device authentication system in the first structure may be structured so as to include first receiving means for receiving from the service server the connection information for the first allocation server; first transmitting means for connecting to the first allocation server based on the connection information received by the first receiving means to transmit the first allocation information to the first allocation server; second receiving means for receiving the connection information for the second allocation server corresponding to the transmitted first allocation information from the first allocation server; second transmitting means for connecting to the second allocation server based on the connection information received by the second receiving means to transmit the second allocation information to the second allocation server; third receiving means for receiving from the second allocation server the connection information for the authentication server corresponding to the transmitted second allocation information; authentication-information transmitting means for connecting to the authentication server based on the connection information received by the third receiving means to transmit the authentication information to the authentication server; authentication-result receiving means for receiving from the authentication server the authentication result based on the authentication information transmitted by the authentication-information transmitting means; and authentication-result transmitting means for transmitting the authentication result received by the authentication-result receiving means to the service server (a second structure).

The first allocation server that provides the connection information for the second allocation server to the terminal device in the terminal-device authentication system in the first structure may be structured so as to include receiving means for connecting to the terminal device to receive the first allocation information from the terminal device; and transmitting means for transmitting the connection information for the second allocation server corresponding to the received first allocation information to the terminal device (a third structure).

The present invention provides a terminal-device authentication system characterized by including a service server for, when a service requiring device authentication is supplied to a terminal device, receiving allocation information from the terminal device, receiving connection information for an authentication server from an allocation system based on the received allocation information, transmitting the received connection information to the terminal device, and receiving an authentication result in the authentication server from the terminal device; the allocation system receiving the allocation information from the service server and transmitting to the service server the connection information for the authentication server corresponding to the received allocation information; and the authentication server receiving authentication information from the terminal device to authenticate the terminal device and transmitting the authentication result of the device authentication to the terminal device (a fourth structure).

The allocation system that provides the connection information for the authentication server to the service server in the terminal-device authentication system in the fourth structure may be structured so as to include allocation-information receiving means for receiving the allocation information from the service server; and connection-information transmitting means for transmitting the connection information for the authentication server corresponding to the received allocation information (a fifth structure).

The service server that provides the service to the terminal device in the terminal-device authentication system in the fourth structure may be structured so as to include allocation-information receiving means for receiving the allocation information from the terminal device; allocation-information transmitting means for transmitting the received allocation information to the allocation system; connection-information receiving means for receiving from the allocation system the connection information for the authentication server corresponding to the transmitted allocation information; and connection-information transmitting means for transmitting the received connection information to the terminal device (a sixth structure).

The allocation information in the allocation system in the fifth structure may include first allocation information and second allocation information. The allocation system in the fifth structure may be structured so as to include a first allocation server receiving the first allocation information from the service server and transmitting to the service server connection information for a second allocation server corresponding to the first allocation information; and the second allocation server receiving the second allocation information form the service server and transmitting to the service server the connection information for the authentication server corresponding to the second allocation information (a seventh structure).

The service server that receives the connection information for the authentication server from the allocation system in the seventh structure may be structured so as to include allocation-information receiving means for receiving the first allocation information and the second allocation information from the terminal device; first transmitting means for connecting to the first allocation server to transmit the received first allocation information to the first allocation server; first receiving means for receiving from the first allocation server the connection information for the second allocation server corresponding to the transmitted first allocation information; second transmitting means for connecting to the second allocation server based on the connection information received by the first receiving means to transmit the second allocation information to the second allocation server; second receiving means for receiving from the second allocation server the connection information for the authentication server corresponding to the transmitted second allocation information; and connection-information transmitting means for transmitting the connection information received by the second receiving means to the terminal device (an eighth structure).

The first allocation server that provides the connection information for the second allocation server to the service server in the allocation system in the seventh structure may be structured so as to include receiving means for receiving the first allocation information from the service server; and transmitting means for transmitting the connection information for the second allocation server corresponding to the received first allocation information (a ninth structure).

The second allocation server that provides the connection information for the authentication server to the service server in the allocation system in the seventh structure may be structured so as to include receiving means for receiving the second allocation information from the service server; and transmitting means for transmitting the connection information for the authentication server corresponding to the received second allocation information (a tenth structure).

The present invention provides a method for a terminal device, adopted in a computer that utilizes the service provided by the service server in the terminal-device authentication system in the first structure. The computer includes first receiving means, first transmitting means, second receiving means, second transmitting means, third receiving means, authentication-information transmitting means, authentication-result receiving means, and authentication-result transmitting means. The method is characterized by including a first receiving step of receiving, by the first receiving means, the connection information for the first allocation server from the service server; a first transmitting step of connecting to the first allocation server based on the connection information received in the first receiving step to transmit the first allocation information to the first allocation server by the first transmitting means; a second receiving step of receiving, by the second receiving means, the connection information for the second allocation server corresponding to the transmitted first allocation information from the first allocation server; a second transmitting step of connecting to the second allocation server based on the connection information received in the second receiving step to transmit the second allocation information to the second allocation server by the second transmitting means; a third receiving step of receiving, by the third receiving means, the connection information for the authentication server corresponding to the transmitted second allocation information from the second allocation server; an authentication-information transmitting step of connecting to the authentication server based on the connection information received in the third receiving step to transmit the authentication information to the authentication server by the authentication-information transmitting means; an authentication-result receiving step of receiving, by the authentication-result receiving means, the authentication result based on the authentication information transmitted in the authentication-information transmitting step from the authentication server; and an authentication-result transmitting step of transmitting, by the authentication-result transmitting means, the authentication result received in the authentication-result receiving step to the service server.

The present invention provides a first allocation method of providing the connection information for the second allocation server to the terminal device in the terminal-device authentication system in the first structure. The first allocation method is adopted in a computer including receiving means and transmitting means. The first allocation method is characterized by including a receiving step of connecting to the terminal device to receive the first allocation information from the terminal device by the receiving means; and a transmitting step of transmitting, by the transmitting means, the connection information for the second allocation server corresponding to the received first allocation information to the terminal device.

The present invention provides an allocation method of providing the connection information for the authentication server to the service server in the terminal-device authentication system in the fourth structure. The allocation method is adopted in a computer system including allocation-information receiving means and connection-information transmitting means. The allocation method is characterized by including an allocation-information receiving step of receiving, by the allocation-information receiving means, the allocation information from the service server; and a connection-information transmitting step of transmitting, by the connection-information transmitting means, the connection information for the authentication server corresponding to the received allocation information.

The present invention provides a service providing method of providing the service to the terminal device in the terminal-device authentication system in the fourth structure. The service providing method is adopted in a computer including allocation-information receiving means, allocation-information transmitting means, connection-information receiving means, and connection-information transmitting means. The service providing method is characterized by including an allocation-information receiving step of receiving, by the allocation-information receiving means, the allocation information from the terminal device; an allocation-information transmitting step of transmitting, by the allocation-information transmitting means, the received allocation information to the allocation system; a connection-information receiving step of receiving, by the connection-information receiving means, the connection information for the authentication server corresponding to the transmitted allocation information from the allocation system; and a connection-information transmitting step of transmitting, by the connection-information transmitting means, the received connection information to the terminal device.

The present invention provides a method for a service server, of receiving the connection information for the authentication server from the allocation system in the seventh structure. The method is adopted in a computer including allocation-information receiving means, first transmitting means, first receiving means, second transmitting means, second receiving means, and connection-information transmitting means. The method is characterized by including an allocation-information receiving step of receiving, by the allocation-information receiving means, the first allocation information and the second allocation information from the terminal device; a first transmitting step of connecting to the first allocation server to transmit the received first allocation information to the first allocation server by the first transmitting means; a first receiving step of receiving, by the first receiving means, the connection information for the second allocation server corresponding to the transmitted first allocation information from the first allocation server; a second transmitting step of connecting to the second allocation server based on the connection information received in the first receiving step to transmit the second allocation information to the second allocation server by the second transmitting means; a second receiving step of receiving, by the second receiving means, the connection information for the authentication server corresponding to the transmitted second allocation information from the second allocation server; and a connection-information transmitting step of transmitting, by the connection-information transmitting means, the connection information received in the second receiving step to the terminal device.

The present invention provides a first allocation method of providing the connection information for the second allocation server to the service server in the allocation system in the seventh structure. The first allocation method is adopted in a computer including receiving means and transmitting means. The first allocation method is characterized by including a receiving step of receiving, by the receiving means, the first allocation information from the service server; and a transmitting step of transmitting, by the transmitting means, the connection information for the second allocation server corresponding to the received first allocation information.

The present invention provides a second allocation method of providing the connection information for the authentication server to the service server in the allocation system in the seventh structure. The second allocation method is adopted in a computer including receiving means and transmitting means. The second allocation method is characterized by including a receiving step of receiving, by the receiving means, the second allocation information from the service server; and a transmitting step of transmitting, by the transmitting means, the connection information for the authentication server corresponding to the received second allocation information.

The present invention provides a terminal device program used in the terminal device including a computer that utilizes the service provided by the service server in the terminal-device authentication system in the first structure. The terminal device program realizes a first receiving function of receiving the connection information for the first allocation server from the service server; a first transmitting function of connecting to the first allocation server based on the connection information received in the first receiving function to transmit the first allocation information to the first allocation server; a second receiving function of receiving the connection information for the second allocation server corresponding to the transmitted first allocation information from the first allocation server; a first transmitting function of connecting to the second allocation server based on the connection information received in the second receiving function to transmit the second allocation information to the second allocation server; a third receiving function of receiving the connection information for the authentication server corresponding to the transmitted second allocation information from the second allocation server; an authentication-information transmitting function of connecting to the authentication server based on the connection information received in the third receiving function to transmit the authentication information to the authentication server; an authentication-result receiving function of receiving the authentication result based on the authentication information transmitted in the authentication-information transmitting function from the authentication server; and an authentication-result transmitting function of transmitting the authentication result received in the authentication-result receiving function to the service server.

The present invention provides a first allocation program used in the first allocation server that is a computer providing the connection information for the second allocation server to the terminal device in the terminal-device authentication system in the first structure. The first allocation program realizes a receiving function of connecting to the terminal device to receive the first allocation information from the terminal device; and a transmitting function of transmitting the connection information for the second allocation server corresponding to the received first allocation information to the terminal device.

The present invention provides an allocation program used in the allocation system that is a computer providing the connection information for the authentication server to the service server in the terminal-device authentication system in the fourth structure. The allocation program realizes an allocation-information receiving function of receiving the allocation information from the service server; and a connection-information transmitting function of transmitting the connection information for the authentication server corresponding to the received allocation information.

The present invention provides a service server program used in the service server that is a computer providing the service to the terminal device in the terminal-device authentication system in the fourth structure. The service server program realizes an allocation-information receiving function of receiving the allocation information from the terminal device; an allocation-information transmitting function of transmitting the received allocation information to the allocation system; a connection-information receiving function of receiving the connection information for the authentication server corresponding to the transmitted allocation information from the allocation system; and a connection-information transmitting function of transmitting the received connection information to the terminal device.

The present invention provides a service server program used in the service server that is a computer receiving the connection information for the authentication server from the allocation system in the seventh structure. The service server program realizes an allocation-information receiving function of receiving the first allocation information and the second allocation information from the terminal device; a first transmitting function of connecting to the first allocation server to transmit the received first allocation information to the first allocation server; a first receiving function of receiving the connection information for the second allocation server corresponding to the transmitted first allocation information from the first allocation server; a second transmitting function of connecting to the second allocation server based on the connection information received in the first receiving function to transmit the second allocation information to the second allocation server; a second receiving function of receiving the connection information for the authentication server corresponding to the transmitted second allocation information from the second allocation server; and a connection-information transmitting function of transmitting the connection information received in the second receiving function to the terminal device.

The present invention provides a first allocation program used in the first allocation server that is a computer providing the connection information for the second allocation server to the service server in the allocation system in the seventh structure. The first allocation program realizes a receiving function of receiving the first allocation information from the service server; and a transmitting function of transmitting the connection information for the second allocation server corresponding to the received first allocation information.

The present invention provides a second allocation program used in the second allocation server that is a computer providing the connection information for the authentication server to the service server in the allocation system in the seventh structure. The second allocation program realizes a receiving function of receiving the second allocation information from the service server; and a transmitting function of transmitting the connection information for the authentication server corresponding to the received second allocation information.

The present invention provides a storage medium readable by a computer storing any of the programs described above.

The terminal device in the second structure may further include connection-information storing means for storing the connection information for the authentication server received by the third receiving means; and confirming means for confirming whether, when the connection information for the first allocation server is received from the service server, the connection information is stored in the connection-information storing means. The terminal device may be structured such that, when the confirming means confirms that the connection information is stored, the authentication-information transmitting means connects to the authentication server based on the stored connection information to transmit the authentication information (an eleventh structure).

The terminal device in the eleventh structure may be structured such that, when the authentication-information transmitting means is not able to connect to the authentication server based on the connection information stored in the connection-information storing means, the authentication-information transmitting means uses the connection information for the authentication server, acquired by using the first transmitting means, the second receiving means, the second transmitting means, and the third receiving means based on the connection information received by the first receiving means, to connect to the authentication server and transmits the authentication information, and such that the connection-information storing means uses the acquired connection information for the authentication server to update the stored connection information (a twelfth structure).

According to the present invention, the authentication target of the CE device can be appropriately allocated.

### Brief Description of the Drawings

Fig. 1 illustrates a network structure of a device authentication system according to a first embodiment.
Fig. 2 illustrates an example of the logical structure of a device ID.
Fig. 3 illustrates the relationship between a CE device and each server according to the first embodiment.
Fig. 4 is a flowchart showing a process in which a service server provides a service requiring the authentication according to the first embodiment.
Figs. 5A and 5B illustrate examples of protocols used as device authentication triggers.
Fig. 6 illustrates the relationship between a CE device and each server according to a second embodiment.
Fig. 7 is a flowchart showing a process in which a service server provides a service requiring the authentication according to the second embodiment.
Fig. 8 shows the structure of an authentication system of a CE device in an unpublished patent document.

### Best Mode for Carrying Out the Invention

First and second preferred embodiments of the present invention will be described in detail with reference to the attached drawings.

### [Summary of First Embodiment]

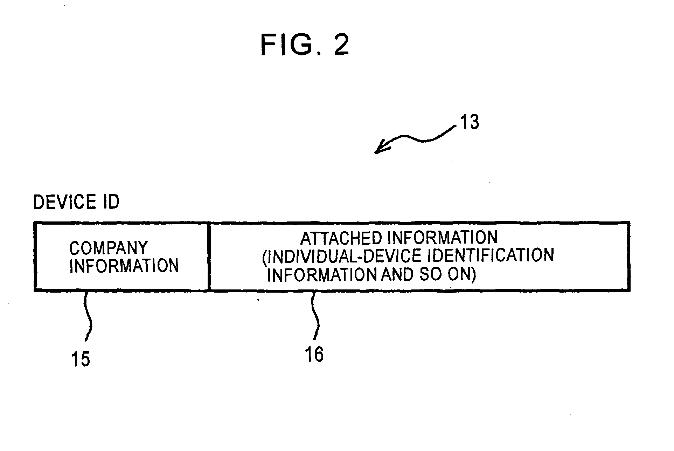

A CE device 3 stores a device ID 13 including company information 15 that identifies a company and attached information 16 that can be freely set by the company, as shown in Fig. 2.

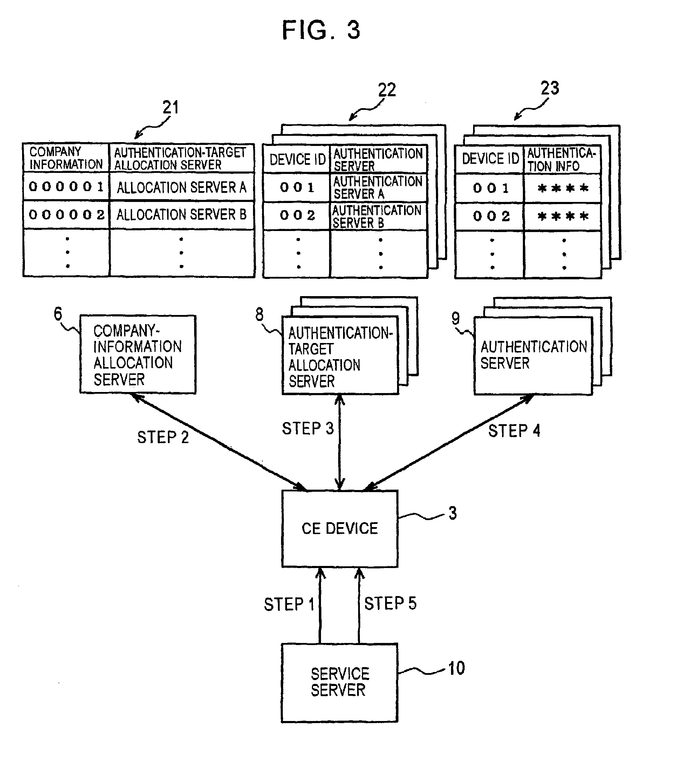

Referring to Fig. 3, when a service server 10 provides a service requiring device authentication to the CE device 3, the service server 10 transmits connection information for a company-information allocation server 6 to the CE device 3.

The CE device 3 transmits the company information 15 to the company-information allocation server 6 based on the transmitted connection information.

The company-information allocation server 6 searches an allocation server table 21 for the company information 15 and acquires connection information for an authentication-target allocation server 8. In the allocation server table 21, the company information 15 is associated with the authentication-target allocation server 8 managed for every company. The company-information allocation server 6 transmits the acquired connection information to the CE device 3.

The CE device 3 connects to the authentication-target allocation server 8 managed by the corresponding company based on the transmitted connection information, and transmits the device ID 13 to the authentication-target allocation server 8.

The authentication-target allocation server 8 searches an authentication server table 22 for the device ID 13 and acquires connection information for an authentication server 9 being in charge of the authentication of the CE device 3. In the authentication server table 22, each device ID 13 is associated with the authentication server 9 being in charge of the authentication of the corresponding CE device 3. This is because the CE device 3 for one company can be associated with multiple authentication servers 9. The authentication-target allocation server 8 transmits the acquired connection information to the CE device 3.

The CE device 3 identifies the authentication server 9 being in charge of the authentication of the CE device 3 based on the transmitted connection information.

The CE device 3 connects to the authentication server 9 based on the connection information, and transmits authentication information required for the device authentication, such as a passphrase or the device ID 13, to the authentication server 9.

In response to the transmitted authentication information, the authentication server 9 authenticates the CE device 3.

As described above, according to the first embodiment, the CE device 3 inquires of the company-information allocation server 6 about the authentication-target allocation server 8 to be connected, and inquires of the authentication-target allocation server 8 about the authentication server 9 to be connected.

The company-information allocation server 6 allocates destination servers based on the company information, and the authentication-target allocation server 8 performs the allocation based on the device ID 13.

As described above, the companies perform common processing before the company is connected to the company-information allocation server 6, whereas each company performs unique processing after the company receives the connection information for the authentication-target allocation server 8 from the company-information allocation server 6.

### [Detail Description of First Embodiment]

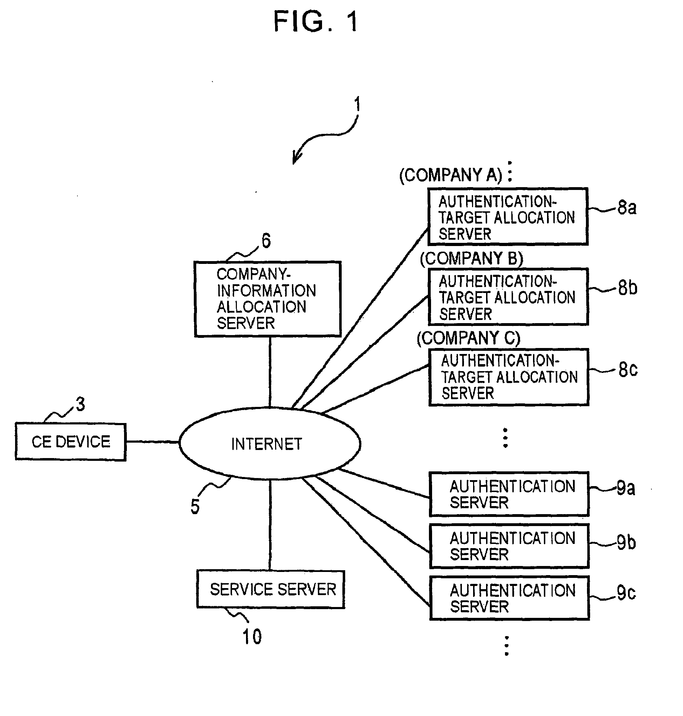

Fig. 1 illustrates a network structure of a device authentication system 1 according to the first embodiment.

The device authentication system 1 has the CE devices 3, the company-information allocation server 6, the authentication-target allocation servers 8a, 8b, 8c, ..., the authentication servers 9a, 9b, 9c, ..., the service servers 10, and so on that can be connected to each other over the Internet 5.

Although one CE device 3 and one service server 10 are shown in Fig. 1, multiple CE devices 3 and multiple service servers 10 exist in the device authentication system 1. One company-information allocation server 6 exists in the device authentication system 1.

The authentication-target allocation servers 8a, 8b, 8c, ... are hereinafter simply denoted by the authentication-target allocation server 8, unless otherwise specified. Similarly, the authentication servers 9a, 9b, 9c, ... are hereinafter simply denoted by the authentication server 9, unless otherwise specified.

The CE device 3 is an electronic product, such as a television set, a video set, a recorder, an audio set, a game machine, a PDA, a rice cooker, or an air conditioner.

The CE device 3 includes a computer having a communication function. The CE device 3 is a terminal device that can communicate with various servers (the service servers 10, the company-information allocation server 6, the authentication-target allocation server 8, the authentication server 9, and other servers) over the Internet 5.

The CE device 3 stores a device ID for discriminating the CE device 3 from other CE devices. The destination server can identify the CE device 3 based on the device ID received from the CE device 3.

As described below, the device ID includes company information representing a manufacturer or a sales company of the CE device 3 and attached information that can be freely set by each company.

The CE device 3 also stores a passphrase for the device authentication. The passphrase is used in the device authentication.

The passphrase is a character string having the same function as a password. A character string longer than the password is called the passphrase. Either of the password or passphrase may be used for the device authentication.

The service server 10 is a server having a service site set up thereon for providing services to the CE device 3.

The service server 10 transmits content or provides services to the CE device 3 that has accessed the service site. A user can utilize the content, receive provision of the services, or use the services provided by the service server 10 by using the CE device 3.

The content provided by the service server 10 includes music content, travel information content, movie content, and recipe content.

The services provided by the service server 10 include provision of personal information including a hobby and preference, device information of the CE device, and information including a setup parameter for connection to the Internet; maintenance of the CE device; and update of software. In addition, the service server 10 can provide an online storage service and an affinity service (a matching service of the specifications or services of the device with the specifications or services required by another device).

When the CE device 3 is a toilet bowl, the service server 10 can provide a service in which stools of a user are sensed by using a sensor to check the health condition of the user.

While some services provided by the service server 10 do not require the device authentication, some services provided thereby require the device authentication.

When the CE device 3 requests a service requiring the device authentication, the service server 10 requests the CE device 3 to connect to the company-information allocation server 6.

A service in which music data is transmitted to a stereo unit including the CE device 3 will now be described as an example of the request of the service requiring the device authentication by the CE device 3.

In this case, the service server 10 transmits screen data to be displayed on a selection screen for selecting music to the stereo unit. The data displayed on the selection screen is described in a computer language, such as a hypertext markup language (HTML).

The stereo unit displays the screen data on the selection screen for selecting music in a display provided in the stereo unit.

On the selection screen, the music to be downloaded can be narrowed down stepwise based on the music genre, the artist name, or the music name.

This narrowing operation can be performed without the device authentication, and the corresponding screen is displayed each time the user narrows down the music.

A downloading state after the music is narrowed down is set so as to require the device authentication. This setting can be realized by embedding, in the screen data, a tag for notifying the service server 10 of the operation to be performed, which requires the device authentication. The tag is associated with a downloading button displayed on the selection screen.

Accordingly, when the user clicks the downloading button, the CE device 3 transmits a notification that the device authentication is required to the service server 10. In response to the notification, the service server 10 transmits information that triggers the device authentication (hereinafter referred to as a device authentication trigger) to the CE device 3.

The CE device 3 receives the device authentication trigger from the service server 10 to perform a series of authentication operations. The device authentication trigger includes the connection information for the company-information allocation server 6. The CE device 3 can connect to the company-information allocation server 6 based on the connection information.

The company-information allocation server 6 is a server instructing the authentication-target allocation server 8 to be connected to the CE device 3.

The company-information allocation server 6 stores the allocation server table in which the company information is associated with the authentication-target allocation server 8. The company-information allocation server 6 receives the company information included in the device ID from the CE device 3, and transmits the connection information for the authentication-target allocation server 8 to be connected to the CE device 3.

The authentication-target allocation server 8, which is provided for every company, is a server instructing the authentication server 9 to be connected to the CE device 3.

The authentication-target allocation server 8 stores the authentication server table in which the device ID is associated with the authentication server 9. The authentication-target allocation server 8 receives the device ID from the CE device 3, and transmits the connection information for the authentication server 9 to be connected to the CE device 3.

The authentication server 9 is a server for authenticating the CE device 3. One or multiple authentication servers 9 are provided for every company. The authentication server 9 performs the device authentication based on the device ID and the passphrase of the CE device 3.

The company-information allocation server 6, the authentication-target allocation server 8, the authentication server 9, and the service site of the service server 10 described above are identified on the Internet 5 based on their uniform resource locators (URLs) or unique resource identifiers (URIs).

The connection information, which the CE device 3 transmits and receives to and from each server, includes such URLs or URIs. The CE device 3 uses this information to connect to the corresponding server.

In other words, the connection information includes information, for example, "http://abc.Zony.co.jp", which identifies the destination server (the company-information allocation server 6, the authentication-target allocation server 8, the authentication server 9, or the like) of the CE device 3.

All the data transmitted and received to and from the CE device 3 or each server is encrypted in order to prevent an illegal access by a third party.

As described above, the company-information allocation server 6 and the authentication-target allocation server 8 serve as a first allocation server and a second allocation server, respectively. The service server 10 transmits the connection information for the company-information allocation server 6 to the CE device 3. The company-information allocation server 6 transmits the connection information for the authentication-target allocation server 8 to the CE device 3. The authentication-target allocation server 8 transmits the connection information for the authentication server 9 to the CE device 3.

Fig. 2 illustrates an example of the logical structure of the device ID 13, with which the CE device 3 is provided.

The device ID 13 includes the company information 15 that identifies a company and the attached information 16 that can be freely set by each company.

A variety of information, such as the serial number of the CE device 3, the type of the CE device 3, and the date of manufacture, can be included in the attached information 16. In the first embodiment, the attached information 16 including the serial number of the CE device 3 is exemplified. The CE device 3 can be identified based on this serial number.

Specifically, for example, a 64-bit extended unique identifier (EUI-64) managed by the IEEE is adopted as the device ID 13.

The EUI-64 is a standard for managing the CE device 3 by using 64-bit information.

Particularly, among the 64 bits, the upper 24 bits are called an organizationally unique identifier (OUI), which is supplied to each company (vendor) by the IEEE. According to the first embodiment, the OUI corresponds to the company information 15.

The remaining lower 40 bits can be freely managed by each company and correspond to the attached information 16 in the first embodiment.

According to the first embodiment, the company information 15 serves as first allocation information used by the company-information allocation server 6 for acquiring the connection information for the authentication-target allocation server 8. The device ID 13 serves as second allocation information used by the authentication-target allocation server 8 for acquiring the connection information for the authentication server 9.

Fig. 3 illustrates the relationship between the CE device 3 and each server.

Steps before the CE device 3 receives a service from the service server 10 will now be described.

Step 1: When the CE device 3 requests a service requiring the device authentication of the service server 10, the service server 10 transmits the connection information for the company-information allocation server 6.

Step 2: The CE device 3 connects to the company-information allocation server 6 based on the connection information to transmit the company information 15 to the company-information allocation server 6.

The company-information allocation server 6 has the allocation server table 21 in which the company information 15 is associated with the connection information for connection to the authentication-target allocation server 8. The CE device 3 is associated with the authentication-target allocation server 8 managed by each company in the allocation server table 21.

The company-information allocation server 6 searches the allocation server table 21 by using the company information 15 received from the CE device 3 as a key, and transmits the connection information for the authentication-target allocation server 8 searched in the allocation server table 21 to the CE device 3.

Step 3: The CE device 3 uses the connection information received from the company-information allocation server 6 to connect to the corresponding authentication-target allocation server 8 being in charge of the CE device 3, among the authentication-target allocation servers 8.

The CE device 3 reads out its device ID 13 and transmits the device ID 13 to the authentication-target allocation server 8.

The authentication-target allocation server 8 has the authentication server table 22 in which the device ID 13 is associated with the connection information for the authentication server 9 being in charge of the authentication of the CE device 3.

The CE device 3 is associated with the authentication server 9 in the authentication server table 22.

Although the authentication server 9 is associated with each CE device 3 in the first embodiment, the present invention is not limited to this association. The authentication server 9 may be associated with a broader group including the corresponding CE devices 3, for example, the authentication server 9 may be associated with the CE devices 3 for every model number. For example, the CE device 3 having a model number XXX may be authenticated with the authentication server 9 identified by connection information 1 and the CE device 3 having a model number YYY may be authenticated with the authentication server 9 identified by connection information 2. In other words, each company can freely associate the CE device 3 with the authentication server 9.

The authentication-target allocation server 8 searches the authentication server table 22 using the device ID 13 received from the CE device 3 as a key, and transmits the connection information for the authentication server 9 searched in the authentication server table 22 to the CE device 3.

Step 4: The CE device 3 receives the connection information for the authentication server 9 from the company-information allocation server 6, and connects to the authentication server 9 based on this connection information. The CE device 3 then transmits the authentication information, such as the passphrase or the device ID 13, required for the device authentication to the authentication server 9.

The authentication server 9 has an authentication information table 23 in which the device ID 13 is associated with the authentication information. The authentication server 9 compares the authentication information received from the CE device 3 with the authentication information in the authentication information table 23 to perform the device authentication. The authentication server 9 then transmits the authentication result to the CE device 3.

Step 5: The CE device 3 transmits the authentication result received from the authentication server 9 to the service server 10 and requests provision of the service.

The service server 10 receives the authentication result transmitted from the CE device 3 and determines the authentication result. If the CE device 3 is authenticated by the authentication server 9, the service server 10 provides the service to the CE device 3. If the CE device 3 is not authenticated by the authentication server 9, the service server 10 transmits, to the CE device 3, an alarm indicating that the CE device 3 is not authenticated by the authentication server 9 and provides no service.

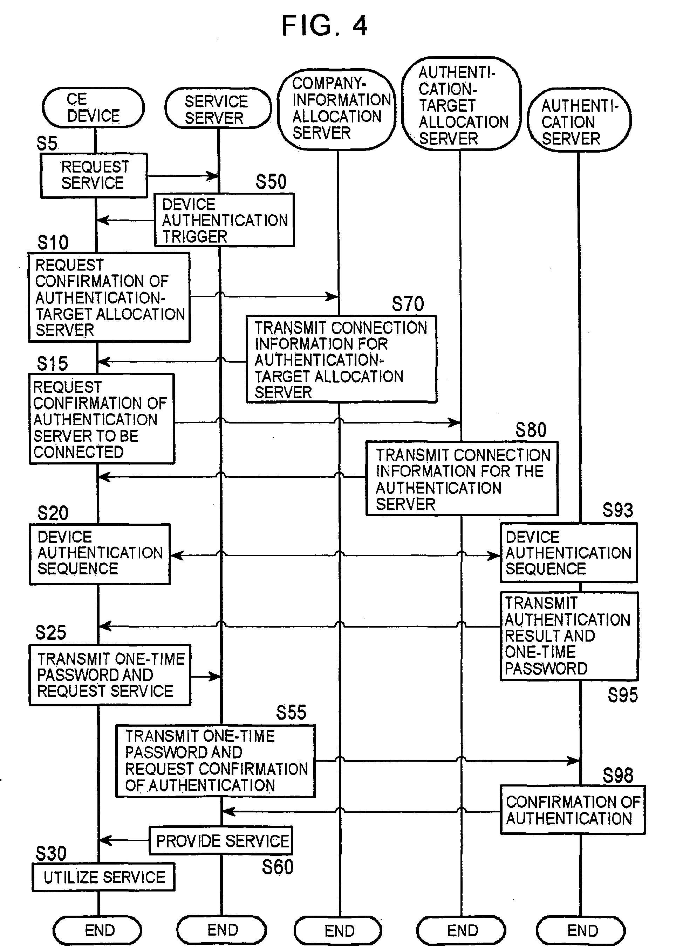

Fig. 4 is a flowchart showing a process in which the service server 10 provides a service requiring the authentication to the CE device 3 in the device authentication system 1.

The CE device 3 and the company-information allocation server 6 follow steps surrounded by rectangular boxes in the flowchart.

First, the CE device 3 requests the service server 10 to provide a service requiring the authentication (Step 5).

In response to this request, the service server 10 transmits a device authentication trigger to the CE device 3, and instructs the CE device 3 to connect to the company-information allocation server 6 (Step 50).

The CE device 3 receives the device authentication trigger from the service server 10 (first receiving means) and connects to the company-information allocation server 6. The CE device 3 then reads out the device ID 13 set to the CE device 3 and acquires the company information 15 in the device ID 13 to transmit the acquired company information 15 to the company-information allocation server 6 (first transmitting means). The CE device 3 requests the company-information allocation server 6 to confirm the authentication-target allocation server 8 to be connected (Step 10).

The company-information allocation server 6 receives the company information 15 from the CE device 3 (receiving means), and searches the allocation server table 21 for the connection information for the authentication-target allocation server 8 to which the CE device 3 is to be connected by using the received company information 15 as a key. The company-information allocation server 6 then transmits the searched connection information to the CE device 3 (transmitting means) (Step 70).

The CE device 3 receives the connection information from the company-information allocation server 6 (second receiving means), and connects to the authentication-target allocation server 8 based on the received connection information. The CE device 3 then transmits the device ID 13 to the authentication-target allocation server 8 (second transmitting means), and requests the authentication-target allocation server 8 to confirm the authentication server 9 to be connected (Step 15).

In response to this request, the authentication-target allocation server 8 receives the device ID 13 from the CE device 3, and searches the authentication server table 22 for the connection information for the authentication server 9 to which the CE device 3 is to be connected by using the received device ID 13 as a key. The authentication-target allocation server 8 then transmits the searched connection information to the CE device 3 (transmitting means) (Step 80).

The CE device 3 connects to the authentication server 9 based on the connection information for the authentication server 9 received from the authentication-target allocation server 8. The CE device 3 then transmits the authentication information to the authentication server 9 (authentication-information transmitting means), and receives the authentication result from the authentication server 9 (authentication-information receiving means). In this manner, the CE device 3 communicates with the authentication server 9 to perform a device authentication sequence (Steps 20 and 93).

In this device authentication sequence, for example, the CE device 3 transmits the authentication information, such as the device ID 13 or the passphrase, to the authentication server 9 that compares the transmitted authentication information with the information in the authentication information table 23 for confirmation.

The device authentication system 1 may be structured so as to ensure the security of the line connection between the CE device 3 and the authentication server 9 using, for example, a cryptographic technique including a secure socket layer (SSL) before the data transmission and/or reception involving the device authentication is performed. In this case, the communication path is encrypted using the SSL to realize a high-security communication.

The authentication server 9 transmits, to the CE device 3, the authentication result corresponding to the authentication information received from the CE device 3 (Step 95). Simultaneously, the authentication server 9 issues a one-time password used when the service server 10 subsequently confirms whether the CE device 3 is surely authenticated by the authentication server 9, and transmits the issued one-time password to the CE device 3.

Issuing the one-time password can prevent spoofing including a counterfeit server having a function similar to that of the authentication server 9.

The authentication server 9 associates the issued one-time password with the device ID 13 of the CE device 3 to which the one-time password is issued and stores the association.

The CE device 3 transmits the authentication result and one-time password received from the authentication server 9 to the service server 10 (authentication-result transmitting means), and requests the service server 10 to provide the corresponding service (Step 25). Also in this case, a cryptographic technique, such as the SSL, may be used to increase the security of the line connection.

The service server 10 receives the authentication result, the device ID 13, and the one-time password from the CE device 3.

The service server 10 then transmits the received device ID 13 and one-time password to the authentication server 9, and requests the authentication server 9 to confirm the authentication in that the authentication result received from the CE device 3 is surely issued from the authentication server 9 (Step 55).

The authentication server 9 receives the device ID 13 and the one-time password from the service server 10, and compares the received device ID 13 and one-time password with the device ID 13 and one-time password associated in Step 95 to confirm whether the authentication is surely performed by the authentication server 9. The authentication server 9 then transmits the confirmation result of the authentication to the service server 10 (Step 98).

The security of the communication between the service server 10 and the authentication server 9 in Steps 55 and 98 described above can be increased using a cryptographic technique, such as the SSL.

The service server 10 receives the confirmation result of the authentication from the authentication server 9, and confirms whether the authentication result transmitted from the CE device 3 is surely issued from the authentication server 9. If the service server 10 confirms that the authentication result received from the CE device 3 authenticates the CE device 3, the service server 10 starts to provide the service to the CE device 3 (Step 60).

The CE device 3 receives the provided service, such as content, from the service server 10. The user utilizes the received service (Step 30).

If the confirmation of the authentication is not received from the authentication server 9 or if the authentication result received from the CE device 3 does not authenticate the CE device 3 in Step 60, the service server 10 provides no service to the CE device 3.

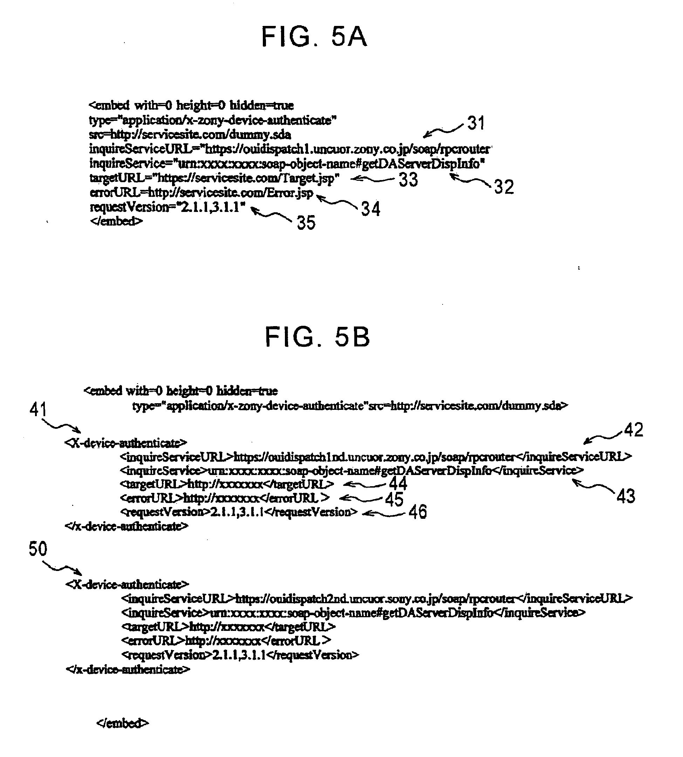

Figs. 5A and 5B illustrate examples of protocols used as the device authentication trigger.

Fig. 5A is an example of a protocol used in known device authentication. This protocol includes the URL 31 of an authentication server, the name 32 of a service (authentication service) provided by the authentication server, the URL 33 of a site to which the CE device 3 is to be connected after the authentication succeeds, the URL 34 of a destination if the authentication fails, and a device authentication version 35.

There may be several versions of device authentication, and different services are used in the service server for different versions. The device authentication version 35 represents the used version number.

As described above, the known protocol includes connection information (URLs) to the authentication server, and the CE device 3 connects to the authentication server based on the connection information.

Fig. 5B is an example of a protocol used as the device authentication trigger in the first embodiment.

This protocol includes a primary protocol 41 and a secondary protocol 50.

The CE device 3 usually uses the primary protocol 41 to connect to the company-information allocation server 6. However, when the CE device 3 cannot connect to the company-information allocation server 6 because, for example, a failure occurs in the company-information allocation server 6 or the company-information allocation server 6 is busy, the CE device 3 uses the secondary protocol 50 to connect to an auxiliary company-information allocation server 6.

Basically, the primary protocol 41 and the secondary protocol 50 have the same information.

The primary protocol 41 includes the URL 42 of the company-information allocation server 6, the name 43 of a service (allocation service) provided by the company-information allocation server 6, the URL 44 of a site to which the CE device 3 is to be connected after the authentication succeeds, the URL 45 of a destination if the authentication fails, and a device authentication version 46.

As described above, the primary protocol 41 includes connection information (URLs) to the company-information allocation server 6, and the CE device 3 connects to the company-information allocation server 6 based on the connection information.

According to the first embodiment described above, the following advantages are offered.
(1) Each company being in charge of the authentication of the CE device 3 can be allocated as the device authentication target. In addition, the allocated company can allocate the device authentication to each authentication server 9.
(2) Confidential information that is uniquely set in each company is usually used to perform the device authentication. If the information concerning all the products that are subjected to the device authentication concentrates on one device-authentication-target allocation server, the confidential information or product manufacturing information (the number of manufactured products can be found based on the device ID 13) of each company can leak into other companies. However, since the device authentication system 1 of the first embodiment can be set such that only the company-information allocation server 6 for allocating the authentication target based on the company information is shared between the companies, it is easy to manage the confidential information and a high security is achieved.
(3) The time and cost required for detecting the authentication server 9 can be reduced.
(4) Separating the determination protocol for determining the authentication server 9 from the authentication protocol used in the authentication server 9 allows open accommodation to various and unique authentication methods.
(5) In the connection of the CE device 3 to the company-information allocation server 6, there is no need to transmit the passphrase or the device ID 13 to the company-information allocation server 6, thus increasing the security.
(6) In the connection of the CE device 3 to the authentication-target allocation server 8, there is no need to transmit the passphrase to the authentication-target allocation server 8, thus increasing the security.

Although, according to the first embodiment, a case in which the authentication trigger from the service server 10 does not include the connection information for the authentication server 9, that is, a case in which the authentication server 9 is not specified is described, the present invention is not limited to this case. The device authentication system 1 according to the present invention may be structured so as to enter the allocation phase only when the authentication server 9 is not specified and so as to bypass the allocation phase and to directly perform the authentication between the CE device 3 and the authentication server 9 when the authentication server 9 is specified.

There is a good prospect of popularization of the CE device 3 in the future, so that the device authentication system 1 can be adopted as a basic method of a device authentication standardization scheme.

Although the authentication servers 9 authenticating the CE device 3 are allocated in the company-information allocation server 6 and the authentication-target allocation server 8 in the first embodiment, the connection information for the authentication server 9, which has been transmitted from the company-information allocation server 6 and the authentication-target allocation server 8 and which has been acquired by the CE device 3, may be stored (connection-information storing means). In this case, the CE device 3 may skip the connection steps to the company-information allocation server 6 and the authentication-target allocation server 8 and may read the stored connection information for the authentication server 9 to connect to the authentication server 9 based on the connection information.

In order for the CE device 3 to directly connect to the authentication server 9, the device authentication trigger received from the service server 10 must include information indicating the correspondence to the allocation service. Specifically, an ObjectID for identifying the allocation service, for example, a device authentication service protocol (DADP), must be described in the name 43 of the service shown in Fig. 5B.

After the CE device 3 reads out the ObjectID for identifying the allocation service in the device authentication trigger, the CE device 3 confirms whether the device authentication trigger includes the connection information for the authentication server 9, which authenticates the CE device 3 and which has been allocated in advance by the allocation service (confirming means). If the device authentication trigger includes the connection information for the authentication server 9, the CE device 3 directly connects to the authentication server 9 for authentication, without connecting to the company-information allocation server 6 and the authentication-target allocation server 8.

If the authentication server 9 is changed when the CE device 3 accesses the known authentication server 9 in the connection information, error processing is performed. In such a case, the allocation service in the steps described above is utilized to acquire the connection information for the authentication server 9.

After the CE device 3 receives the confirmation of the authentication from the authentication server 9, the CE device 3 caches (updates) the connection information for the authentication server received from the authentication-target allocation server 8.

Although, as described above, according to the first embodiment, the CE device 3 transmits the device ID 13 having the structure shown in Fig. 2 to the company-information allocation server 6, the CE device 3 may transmit, for example, only the information indicating which company manufactures the CE device 3, that is, the company information 15, to the company-information allocation server 6, instead of transmitting all the information in the device ID.

When the attached information 16 is further divided into device type information 16-1 and individual-device identification information 16-2, the CE device 3 may transmit only the device type information 16-1 to the authentication-target allocation server 8 and may transmit the device ID 13 only to the authentication server 9. The determination whether the entire device ID is transmitted or minimum part of the device ID is transmitted is performed based on whether the company-information allocation server 6 and the authentication-target allocation server 8 have, at least, the information sufficient to determine the subsequent destination.

In order to determine the necessary amount of information of the device ID, the service server 10 and the company-information allocation server 6 may specify the amount of information required by the company-information allocation server 6 and the authentication-target allocation server 8, respectively. Alternatively, the company-information allocation server 6 and the authentication-target allocation server 8 may inform the CE device 3, in advance, of the amount of information of the device ID required in the connection.

In the specification of part the device ID, the number of high-order bits that is required may be specified, or mask information indicating only the information of a required part may be provided to obtain a value given by performing an arithmetic operation by using the mask information and the device ID 13. For example, if the device ID 13 includes "1010" as the company information 15 and "110001101" as the attached information 16 and only the company information 15 is required, "1111000000000" may be provided as the mask information and a logical AND of the device ID and the mask information, that is, "1010000000000" may be transmitted. The method of specifying part of the device ID is not limited to this. Any method may be adopted as long as it provides necessary data.

### Summary of Second Embodiment

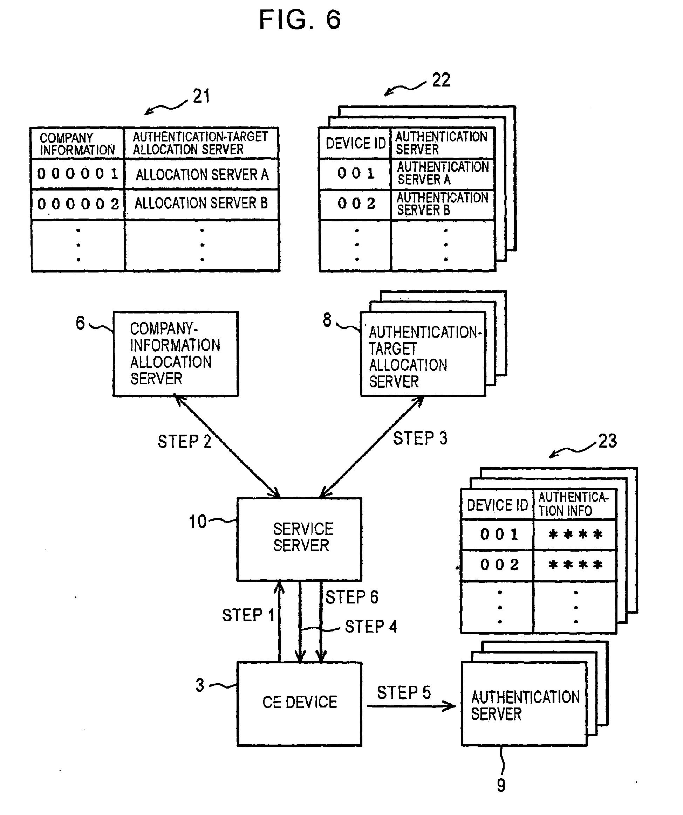

Referring to Fig. 6, when the CE device 3 requests the service server 10 to provide a service requiring the device authentication, the CE device 3 transmits the device ID 13 to the service server 10.

The service server 10 extracts the company information 15 from the device ID 13, and transmits the extracted company information 15 to the company-information allocation server 6.

The company-information allocation server 6 searches the allocation server table 21 for the company information 15 to acquire the connection information for the authentication-target allocation server 8.

The company-information allocation server 6 then transmits the acquired connection information for the authentication-target allocation server 8 to the service server 10.

The service server 10 connects to the authentication-target allocation server 8 managed by the company having the CE device 3 based on the transmitted connection information, and transmits the device ID 13 to the authentication-target allocation server 8.

The authentication-target allocation server 8 searches the authentication server table 22 for the device ID 13 to acquire the connection information for the authentication server 9 being in charge of the authentication of the CE device 3. The authentication-target allocation server 8 then transmits the acquired connection information for the authentication server 9 to the service server 10.

The service server 10 transmits the connection information to the CE device 3.

The CE device 3 identifies the authentication server 9 being in charge of the CE device 3 based on the transmitted connection information.

The CE device 3 connects to the authentication server 9 based on the connection information to transmit the authentication information, such as the passphrase or the device ID 13, required for the device authentication.

In response to the transmitted authentication information, the authentication server 9 authenticates the CE device 3.

As described above, according to a second embodiment, the service server 10 identifies the authentication server 9 based on the device ID 13.

### Detailed Description of Second Embodiment

The network structure of the second embodiment is the same as in the first embodiment (Fig. 1). The same reference numerals are used to identify the same components. The device ID used in the CE device 3 of the second embodiment is the same as one shown in Fig. 2.

Fig. 6 illustrates the relationship between the CE device 3 and each server in the device authentication system 1.

Steps before the CE device 3 receives a service from the service server 10 will now be described.

Step 1: The CE device 3 requests a service requiring the device authentication of the service server 10. The CE device 3 reads out its device ID 13 and transmits the readout device ID 13 to the service server 10.

Step 2: The service server 10 receives the device ID 13 from the CE device 3. The service server 10 extracts the company information 15 from the device ID 13, and transmits the extracted company information 15 to the company-information allocation server 6.

The company-information allocation server 6 has the allocation server table 21 in which the company information 15 is associated with the connection information for connection to the authentication-target allocation server 8, as in the first embodiment. The CE device 3 is associated with the authentication-target allocation server 8 managed by each company in the allocation server table 21.

The company-information allocation server 6 searches the allocation server table 21 by using the company information 15 received from the service server 10 as a key, and transmits the connection information for the authentication-target allocation server 8, searched in the allocation server table 21, to the service server 10.

Step 3: The service server 10 uses the connection information received from the company-information allocation server 6 to connect to the authentication-target allocation server 8 being in charge of the CE device 3, among the authentication-target allocation servers 8.

The service server 10 then transmits the device ID 13 received from the CE device 3 to the authentication-target allocation server 8.

The authentication-target allocation server 8 has the authentication server table 22 in which the device ID 13 is associated with the connection information for the authentication server 9 being in charge of the authentication of the CE device 3, as in the first embodiment.

The CE device 3 is associated with the authentication server 9 in the authentication server table 22.

The authentication-target allocation server 8 searches the authentication server table 22 using the device ID 13 received from the CE device 3 as a key, and transmits the connection information for the authentication server 9, searched in the authentication server table 22, to the service server 10.

Step 4: The service server 10 receives the connection information for the authentication server 9 being in charge of the authentication of the CE device 3 from the authentication-target allocation server 8, and transmits the received connection information for the authentication server 9 to the CE device 3.

Step 5: The CE device 3 receives the connection information for the authentication server 9 from the service server 10, and uses the received connection information to connect to the authentication server 9. The CE device 3 then transmits the authentication information, such as the passphrase or the device ID 13, required in the device authentication to the authentication server 9.

The authentication server 9 has an authentication information table 23 in which the device ID 13 is associated with the authentication information, as in the first embodiment. The authentication server 9 compares the authentication information received from the CE device 3 with the authentication information in the authentication information table 23 to perform the device authentication. The authentication server 9 then transmits the authentication result to the CE device 3.

Step 6: The CE device 3 transmits the authentication result received from the authentication server 9 to the service server 10, and requests the service server 10 to provide the service.

The service server 10 receives the authentication result of the CE device 3, and determines the authentication result. If the CE device 3 is authenticated by the authentication server 9, the service server 10 provides the service to the CE device 3. If the CE device 3 is not authenticated by the authentication server 9, the service server 10 transmits, to the CE device 3, an alarm indicating that the CE device 3 is not authenticated by the authentication server 9, and provides no service.

As described above, the company-information allocation server 6 (the first allocation server) is combined with the authentication-target allocation server 8 (the second allocation server) to serve as an allocation system for transmitting the connection information for the allocation target to the CE device 3. The allocation system has allocation-information receiving means for receiving allocation information (the device ID 13 and the company information 15) from the service server 10 and connection-information transmitting means for transmitting the connection information (URL) to the authentication server 9.

The function of the allocation system may be realized by one allocation server having both the function of the company-information allocation server 6 and that of the authentication-target allocation server 8.

Furthermore, when the company-information allocation server 6 is combined with the authentication-target allocation server 8 to serve as the allocation system, the service server 10 has allocation-information receiving means for receiving the allocation information from the CE device 3, allocation-information transmitting means for transmitting the allocation information to the allocation system, connection-information receiving means for receiving the connection information for the authentication server 9 from the allocation system, and connection-information transmitting means for transmitting the received connection information for the authentication server 9 to the CE device 3.

In the allocation system, the company-information allocation server 6 (the first allocation server) receives the first allocation information (the company information 15) from the service server 10 and transmits the connection information for the authentication-target allocation server 8 (the second allocation server) to the service server 10. The authentication-target allocation server 8 receives the second allocation information (the device ID 13) from the service server 10 and transmits the connection information for the authentication server 9.

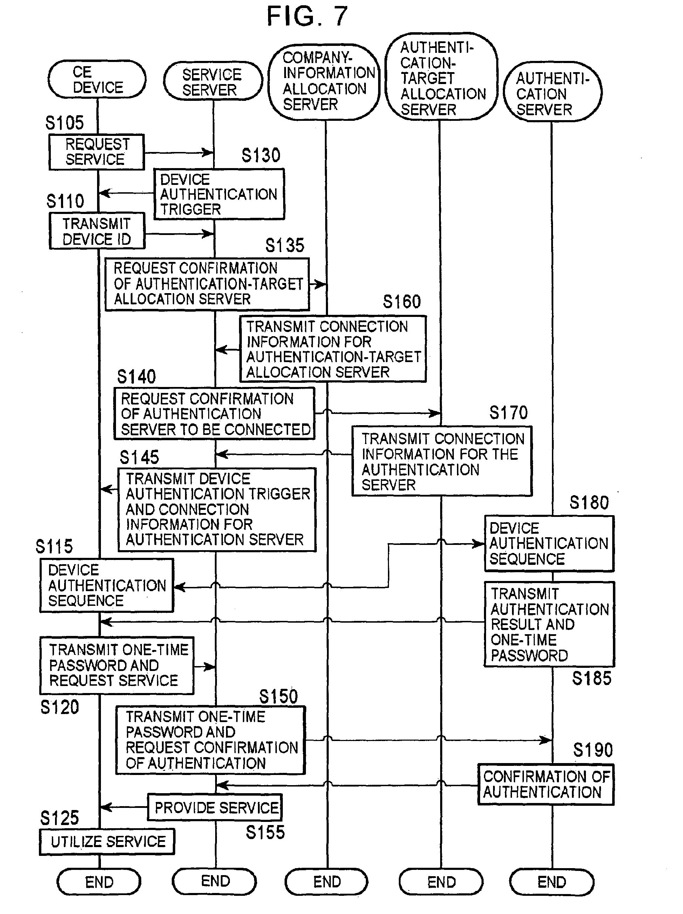

Fig. 7 is a flowchart showing a process in which the service server 10 provides a service requiring the authentication to the CE device 3 in the device authentication system 1 in the second embodiment.

The service server 10, the company-information allocation server 6, and the authentication-target allocation server 8 follow steps surrounded by rectangular boxes in the flowchart.

First, the CE device 3 requests the service server 10 to provide a service requiring the authentication (Step 105).

In response to the request, the service server 10 transmits a device authentication trigger to the CE device 3, and requests the CE device 3 to transmit the device ID 13 to the service server 10 (Step 130).

The CE device 3 receives the device authentication trigger from the service server 10, and reads out its device ID 13 to transmit the readout device ID 13 to the service server 10 (Step 110).

The service server 10 receives the device ID 13 from the CE device 3 (the allocation-information receiving means). The service server 10 then extracts the company information 15 from the device ID 13, and transmits the extracted company information 15 to the company-information allocation server 6 (first transmitting means) (Step 135).

The service server 10 requests the company-information allocation server 6 to confirm the authentication-target allocation server 8 to be connected by the CE device 3.

The company-information allocation server 6 receives the company information 15 from the service server 10 (receiving means), and searches the allocation server table 21 for the connection information for the authentication-target allocation server 8 to which the CE device 3 is to be connected by using the received company information 15 as a key. The company-information allocation server 6 then transmits the searched connection information for the authentication-target allocation server 8 to the service server 10 (transmitting means) (Step 160).

The service server 10 receives the connection information from the company-information allocation server 6 (first receiving means), and connects to the authentication-target allocation server 8 based on the received connection information. The service server 10 then transmits the device ID 13 received from the CE device 3 to the authentication-target allocation server 8 (second transmitting means), and requests the authentication-target allocation server 8 to confirm the authentication server 9 to be connected by the CE device 3 (Step 140).

In response to this request, the authentication-target allocation server 8 receives the device ID 13 from the service server 10 (receiving means), and searches the authentication server table 22 for the connection information for the authentication server 9 to which the CE device 3 is to be connected by using the received device ID 13 as a key. The authentication-target allocation server 8 then transmits the searched connection information for the authentication server 9 to the service server 10 (transmitting means) (Step 170).

The service server 10 receives the connection information for the authentication server 9 from the authentication-target allocation server 8 (second receiving means), and transmits the received connection information for the authentication server 9 to the CE device 3 (connection-information transmitting means). The service server 10 also transmits the device authentication trigger, which is the information instructing the CE device 3 to receive the device authentication in the authentication server 9, to the CE device 3 (Step 145).

The CE device 3 connects to the authentication server 9 based on the connection information for the authentication server 9 received from the service server 10, and communicates with the authentication server 9 to perform a device authentication sequence (Steps 115 and 180).

In this device authentication sequence, for example, the CE device 3 transmits the authentication information, such as the device ID 13 or the passphrase, to the authentication server 9 that compares the transmitted authentication information with the information in the authentication information table 23 for confirmation.

The device authentication system 1 may be structured so as to ensure the security of the line connection between the CE device 3 and the authentication server 9 using, for example, a cryptographic technique including the SSL before the data transmission and/or reception involving the device authentication is performed.

The authentication server 9 transmits, to the CE device 3, the authentication result corresponding to the authentication information received from the CE device 3 (Step 185). Simultaneously, the authentication server 9 issues a one-time password used when the service server 10 subsequently confirms whether the CE device 3 is surely authenticated by the authentication server 9, and transmits the issued one-time password to the CE device 3.

Issuing the one-time password can prevent spoofing including a counterfeit server having a function similar to that of the authentication server 9.

The authentication server 9 associates the issued one-time password with the device ID 13 of the CE device 3 to which the one-time password is issued and stores the association.

The CE device 3 transmits the authentication result and one-time password received from the authentication server 9 to the service server 10, and requests the service server 10 to provide the corresponding service (Step 120). Also in this case, a cryptographic technique, such as the SSL, may be used to increase the security of the line connection.

The service server 10 receives the authentication result, the device ID 13, and the one-time password from the CE device 3.

The service server 10 then transmits the received device ID 13 and one-time password to the authentication server 9, and requests the authentication server 9 to confirm the authentication in that the authentication result received from the CE device 3 is surely issued from the authentication server 9 (Step 150).

The authentication server 9 receives the device ID 13 and the one-time password from the service server 10, and compares the received device ID 13 and one-time password with the device ID 13 and one-time password associated in Step 185 to confirm whether the authentication is surely performed by the authentication server 9. The authentication server 9 then transmits the confirmation result of the authentication to the service server 10 (Step 190).

The security of the communication between the service server 10 and the authentication server 9 in Steps 150 and 190 described above can be increased using a cryptographic technique, such as the SSL.

The service server 10 receives the confirmation result of the authentication from the authentication server 9, and confirms whether the authentication result transmitted from the CE device 3 is surely issued from the authentication server 9. If the service server 10 confirms that the authentication result received from the CE device 3 authenticates the CE device 3, the service server 10 starts to provide the service to the CE device 3 (Step 155).

The CE device 3 receives the provided service, such as content, from the service server 10. The user utilizes the received service (Step 125).

If the confirmation of the authentication is not received from the authentication server 9 or if the authentication result received from the CE device 3 does not authenticate the CE device 3 in Step 155, the service server 10 provides no service to the CE device 3.

According to the second embodiment described above, the same advantages as (1) to (4) in the first embodiment are offered.

In addition to the above advantages, the second embodiment has the following advantages.
(1) When the CE device 3 requests the service server 10 to provide a service requiring the device authentication, the CE device 3 transmits the device ID 13 to the service server 10 and receives the connection information for the authentication server 9 from the service server 10. Since this operation performed by the CE device 3 is the same as in known device authentication systems, a known CE device can be used as the CE device 3.
(2) In the connection of the service server 10 to the company-information allocation server 6, there is no need to transmit the passphrase or the device ID 13 to the company-information allocation server 6, thus increasing the security.
(3) In the connection of the service server 10 to the authentication-target allocation server 8, there is no need to transmit the passphrase to the authentication-target allocation server 8, thus increasing the security.

## Claims

1. A terminal-device authentication system **characterized by** comprising:
a service server for, when a service requiring device authentication is supplied to a terminal device, transmitting connection information for a first allocation server to the terminal device and receiving an authentication result from the terminal device;
the first allocation server receiving first allocation information from the terminal device and transmitting connection information for a second allocation server corresponding to the first allocation information;
the second allocation server receiving second allocation information from the terminal device and transmitting connection information for an authentication server corresponding to the second allocation information; and
the authentication server receiving authentication information from the terminal device to perform the device authentication and transmitting the authentication result to the terminal device.

2. The terminal device that utilizes the service provided by the service server in the terminal-device authentication system according to Claim 1, the terminal device being
**characterized by** comprising:
first receiving means for receiving from the service server the connection information for the first allocation server;
first transmitting means for connecting to the first allocation server based on the connection information received by the first receiving means to transmit the first allocation information to the first allocation server;
second receiving means for receiving the connection information for the second allocation server corresponding to the transmitted first allocation information from the first allocation server;
second transmitting means for connecting to the second allocation server based on the connection information received by the second receiving means to transmit the second allocation information to the second allocation server;
third receiving means for receiving from the second allocation server the connection information for the authentication server corresponding to the transmitted second allocation information;
authentication-information transmitting means for connecting to the authentication server based on the connection information received by the third receiving means to transmit the authentication information to the authentication server;
authentication-result receiving means for receiving from the authentication server the authentication result based on the authentication information transmitted by the authentication-information transmitting means; and
authentication-result transmitting means for transmitting the authentication result received by the authentication-result receiving means to the service server.

3. The first allocation server that provides the connection information for the second allocation server to the terminal device in the terminal-device authentication system according to Claim 1, the first allocation server being **characterized by** comprising:
receiving means for connecting to the terminal device to receive the first allocation information from the terminal device; and
transmitting means for transmitting the connection information for the second allocation server corresponding to the received first allocation information to the terminal device.

4. A terminal-device authentication system **characterized by** comprising:
a service server for, when a service requiring device authentication is supplied to a terminal device, receiving allocation information from the terminal device, receiving connection information for an authentication server from an allocation system based on the received allocation information, transmitting the received connection information to the terminal device, and receiving an authentication result in the authentication server from the terminal device;
the allocation system receiving the allocation information from the service server and transmitting to the service server the connection information for the authentication server corresponding to the received allocation information; and
the authentication server receiving authentication information from the terminal device to authenticate the terminal device and transmitting the authentication result of the device authentication to the terminal device.

5. The allocation system that provides the connection information for the authentication server to the service server in the terminal-device authentication system according to Claim 4, the allocation system being **characterized by** comprising:
allocation-information receiving means for receiving the allocation information from the service server; and
connection-information transmitting means for transmitting the connection information for the authentication server corresponding to the received allocation information.

6. The service server that provides the service to the terminal device in the terminal-device authentication system according to Claim 4, the service server being **characterized by** comprising:
allocation-information receiving means for receiving the allocation information from the terminal device;
allocation-information transmitting means for transmitting the received allocation information to the allocation system;
connection-information receiving means for receiving from the allocation system the connection information for the authentication server corresponding to the transmitted allocation information; and
connection-information transmitting means for transmitting the received connection information to the terminal device.

7. The allocation system according to Claim 5,
the allocation information being **characterized by** including first allocation information and second allocation information, and
the allocation system being **characterized by** comprising:
a first allocation server receiving the first allocation information from the service server and transmitting to the service server connection information for a second allocation server corresponding to the first allocation information; and
the second allocation server receiving the second allocation information form the service server and transmitting to the service server the connection information for the authentication server corresponding to the second allocation information.

8. The service server that receives the connection information for the authentication server from the allocation system according to Claim 7, the service server being **characterized by** comprising:
allocation-information receiving means for receiving the first allocation information and the second allocation information from the terminal device;
first transmitting means for connecting to the first allocation server to transmit the received first allocation information to the first allocation server;
first receiving means for receiving from the first allocation server the connection information for the second allocation server corresponding to the transmitted first allocation information;
second transmitting means for connecting to the second allocation server based on the connection information received by the first receiving means to transmit the second allocation information to the second allocation server;
second receiving means for receiving from the second allocation server the connection information for the authentication server corresponding to the transmitted second allocation information; and
connection-information transmitting means for transmitting the connection information received by the second receiving means to the terminal device.

9. The first allocation server that provides the connection information for the second allocation server to the service server in the allocation system according to Claim 7, the first allocation server being **characterized by** comprising:
receiving means for receiving the first allocation information from the service server; and
transmitting means for transmitting the connection information for the second allocation server corresponding to the received first allocation information.

10. The second allocation server that provides the connection information for the authentication server to the service server in the allocation system according to Claim 7, the second allocation server being **characterized by** comprising:
receiving means for receiving the second allocation information from the service server; and
transmitting means for transmitting the connection information for the authentication server corresponding to the received second allocation information.

11. A method for a terminal device, adopted in a computer that utilizes the service provided by the service server in the terminal-device authentication system according to Claim 1,
the computer being **characterized by** comprising first receiving means, first transmitting means, second receiving means, second transmitting means, third receiving means, authentication-information transmitting means, authentication-result receiving means, and authentication-result transmitting means, and the method being **characterized by** comprising:
a first receiving step of receiving, by the first receiving means, the connection information for the first allocation server from the service server;
a first transmitting step of connecting to the first allocation server based on the connection information received in the first receiving step to transmit the first allocation information to the first allocation server by the first transmitting means;
a second receiving step of receiving, by the second receiving means, the connection information for the second allocation server corresponding to the transmitted first allocation information from the first allocation server;
a second transmitting step of connecting to the second allocation server based on the connection information received in the second receiving step to transmit the second allocation information to the second allocation server by the second transmitting means;
a third receiving step of receiving, by the third receiving means, the connection information for the authentication server corresponding to the transmitted second allocation information from the second allocation server;
an authentication-information transmitting step of connecting to the authentication server based on the connection information received in the third receiving step to transmit the authentication information to the authentication server by the authentication-information transmitting means;
an authentication-result receiving step of receiving, by the authentication-result receiving means, the authentication result based on the authentication information transmitted in the authentication-information transmitting step from the authentication server; and
an authentication-result transmitting step of transmitting, by the authentication-result transmitting means, the authentication result received in the authentication-result receiving step to the service server.

12. A first allocation method of providing the connection information for the second allocation server to the terminal device in the terminal-device authentication system according to Claim 1,
the first allocation method being adopted in a computer including receiving means and transmitting means, and the first allocation method being **characterized by** comprising:
a receiving step of connecting to the terminal device to receive the first allocation information from the terminal device by the receiving means; and
a transmitting step of transmitting, by the transmitting means, the connection information for the second allocation server corresponding to the received first allocation information to the terminal device.

13. An allocation method of providing the connection information for the authentication server to the service server in the terminal-device authentication system according to Claim 4,
the allocation method being adopted in a computer system including allocation-information receiving means and connection-information transmitting means, and the allocation method being **characterized by** comprising:
an allocation-information receiving step of receiving, by the allocation-information receiving means, the allocation information from the service server; and
a connection-information transmitting step of transmitting, by the connection-information transmitting means, the connection information for the authentication server corresponding to the received allocation information.

14. A service providing method of providing the service to the terminal device in the terminal-device authentication system according to Claim 4,
the service providing method being adopted in a computer including allocation-information receiving means, allocation-information transmitting means, connection-information receiving means, and connection-information transmitting means, and the service providing method being **characterized by** comprising:
an allocation-information receiving step of receiving, by the allocation-information receiving means, the allocation information from the terminal device;
an allocation-information transmitting step of transmitting, by the allocation-information transmitting means, the received allocation information to the allocation system;
a connection-information receiving step of receiving, by the connection-information receiving means, the connection information for the authentication server corresponding to the transmitted allocation information from the allocation system; and
a connection-information transmitting step of transmitting, by the connection-information transmitting means, the received connection information to the terminal device.

15. A method for a service server, of receiving the connection information for the authentication server from the allocation system according to Claim 7,
the method being adopted in a computer including allocation-information receiving means, first transmitting means, first receiving means, second transmitting means, second receiving means, and connection-information transmitting means, and the method being **characterized by** comprising:
an allocation-information receiving step of receiving, by the allocation-information receiving means, the first allocation information and the second allocation information from the terminal device;
a first transmitting step of connecting to the first allocation server to transmit the received first allocation information to the first allocation server by the first transmitting means;
a first receiving step of receiving, by the first receiving means, the connection information for the second allocation server corresponding to the transmitted first allocation information from the first allocation server;
a second transmitting step of connecting to the second allocation server based on the connection information received in the first receiving step to transmit the second allocation information to the second allocation server by the second transmitting means;
a second receiving step of receiving, by the second receiving means, the connection information for the authentication server corresponding to the transmitted second allocation information from the second allocation server; and
a connection-information transmitting step of transmitting, by the connection-information transmitting means, the connection information received in the second receiving step to the terminal device.

16. A first allocation method of providing the connection information for the second allocation server to the service server in the allocation system according to Claim 7,
the first allocation method being adopted in a computer including receiving means and transmitting means, and the first allocation method being **characterized by** comprising:
a receiving step of receiving, by the receiving means, the first allocation information from the service server; and
a transmitting step of transmitting, by the transmitting means, the connection information for the second allocation server corresponding to the received first allocation information.

17. A second allocation method of providing the connection information for the authentication server to the service server in the allocation system according to Claim 7,
the second allocation method being adopted in a computer including receiving means and transmitting means, and the second allocation method being **characterized by** comprising:
a receiving step of receiving, by the receiving means, the second allocation information from the service server; and
a transmitting step of transmitting, by the transmitting means, the connection information for the authentication server corresponding to the received second allocation information.

18. A terminal device program used in the terminal device including a computer that utilizes the service provided by the service server in the terminal-device authentication system according to Claim 1, the terminal device program realizing:
a first receiving function of receiving the connection information for the first allocation server from the service server;
a first transmitting function of connecting to the first allocation server based on the connection information received in the first receiving function to transmit the first allocation information to the first allocation server;
a second receiving function of receiving the connection information for the second allocation server corresponding to the transmitted first allocation information from the first allocation server;
a first transmitting function of connecting to the second allocation server based on the connection information received in the second receiving function to transmit the second allocation information to the second allocation server;
a third receiving function of receiving the connection information for the authentication server corresponding to the transmitted second allocation information from the second allocation server;
an authentication-information transmitting function of connecting to the authentication server based on the connection information received in the third receiving function to transmit the authentication information to the authentication server;
an authentication-result receiving function of receiving the authentication result based on the authentication information transmitted in the authentication-information transmitting function from the authentication server; and
an authentication-result transmitting function of transmitting the authentication result received in the authentication-result receiving function to the service server.

19. A first allocation program used in the first allocation server that is a computer providing the connection information for the second allocation server to the terminal device in the terminal-device authentication system according to Claim 1, the first allocation program realizing:
a receiving function of connecting to the terminal device to receive the first allocation information from the terminal device; and
a transmitting function of transmitting the connection information for the second allocation server corresponding to the received first allocation information to the terminal device.

20. An allocation program used in the allocation system that is a computer providing the connection information for the authentication server to the service server in the terminal-device authentication system according to Claim 4, the allocation program realizing:
an allocation-information receiving function of receiving the allocation information from the service server; and
a connection-information transmitting function of transmitting the connection information for the authentication server corresponding to the received allocation information.

21. A service server program used in the service server that is a computer providing the service to the terminal device in the terminal-device authentication system according to Claim 4, the service server program realizing:
an allocation-information receiving function of receiving the allocation information from the terminal device;
an allocation-information transmitting function of transmitting the received allocation information to the allocation system;
a connection-information receiving function of receiving the connection information for the authentication server corresponding to the transmitted allocation information from the allocation system; and
a connection-information transmitting function of transmitting the received connection information to the terminal device.

22. A service server program used in the service server that is a computer receiving the connection information for the authentication server from the allocation system according to Claim 7, the service server program realizing:
an allocation-information receiving function of receiving the first allocation information and the second allocation information from the terminal device;
a first transmitting function of connecting to the first allocation server to transmit the received first allocation information to the first allocation server;
a first receiving function of receiving the connection information for the second allocation server corresponding to the transmitted first allocation information from the first allocation server;
a second transmitting function of connecting to the second allocation server based on the connection information received in the first receiving function to transmit the second allocation information to the second allocation server;
a second receiving function of receiving the connection information for the authentication server corresponding to the transmitted second allocation information from the second allocation server; and
a connection-information transmitting function of transmitting the connection information received in the second receiving function to the terminal device.

23. A first allocation program used in the first allocation server that is a computer providing the connection information for the second allocation server to the service server in the allocation system according to Claim 7, the first allocation program realizing:
a receiving function of receiving the first allocation information from the service server; and
a transmitting function of transmitting the connection information for the second allocation server corresponding to the received first allocation information.

24. A second allocation program used in the second allocation server that is a computer providing the connection information for the authentication server to the service server in the allocation system according to Claim 7, the second allocation program realizing:
a receiving function of receiving the second allocation information from the service server; and
a transmitting function of transmitting the connection information for the authentication server corresponding to the received second allocation information.

25. A storage medium readable by a computer storing the terminal device program according to Claim 18.

26. A storage medium readable by a computer storing the first allocation program according to Claim 19.

27. A storage medium readable by a computer storing the allocation program according to Claim 20.

28. A storage medium readable by a computer storing the service server program according to Claim 21 or 22.

29. A storage medium readable by a computer storing the first allocation program according to Claim 23.

30. A storage medium readable by a computer storing the second allocation program according to Claim 24.

31. The terminal device according to Claim 2 further comprising:
connection-information storing means for storing the connection information for the authentication server received by the third receiving means; and
confirming means for confirming whether, when the connection information for the first allocation server is received from the service server, the connection information is stored in the connection-information storing means,
the terminal device being **characterized in that**, when the confirming means confirms that the connection information is stored, the authentication-information transmitting means connects to the authentication server based on the stored connection information to transmit the authentication information.

32. The terminal device according to Claim 31, **characterized in that**, when the authentication-information transmitting means is not able to connect to the authentication server based on the connection information stored in the connection-information storing means, the authentication-information transmitting means uses the connection information for the authentication server, acquired by using the first transmitting means, the second receiving means, the second transmitting means, and the third receiving means based on the connection information received by the first receiving means, to connect to the authentication server and transmits the authentication information, and
**in that** the connection-information storing means uses the acquired connection information for the authentication server to update the stored connection information.
